# EUROPÄISCHE PATENTSCHRIFT

(11) **EP 4 334 673 B1**
(45) Veröffentlichungstag und Bekanntmachung des Hinweises auf die Patenterteilung: **25.03.2026**
(21) Anmeldenummer: 22728164.9
(22) Anmeldetag: 06.05.2022
(51) Int. Cl.: G01B 3/12, G01B 7/04, B60B 19/00, B60B 19/12, G01C 22/02, F16L 55/48, F16L 101/12, F16L 101/30

(54) **ODOMETER SOWIE INSPEKTIONS- UND/ODER REINIGUNGSVORRICHTUNG**
ODOMETER AND INSPEKTION AND/OR CLEANING DEVICE
ODOMÈTRE ET DISPOSITIF D'INSPECTION ET/OU DE NETTOYAGE

(30) Priorität: 07.05.2021 BE 202105373
(43) Veröffentlichungstag der Anmeldung: 13.03.2024
(73) Patentinhaber: Rosen IP AG, 6370 Stans (CH)
(72) Erfinder: DANILOV, Andrey, 49809 Lingen (DE)
(74) Vertreter: Wischmeyer, André
(86) Internationale Anmeldenummer: PCT/EP2022/062346
(87) Internationale Veröffentlichungsnummer: WO 2022/234119

(56) Entgegenhaltungen:
- EP-B1- 0 526 901
- WO-A1-2021/156433
- WO-A2-2014/096942
- CN-A- 102 621 218
- GB-A- 2 588 962
- JP-B2- H0 827 266
- US-A- 6 125 955
- US-A1- 2005 252 296
- PATRICK SCHOENEICH ET AL: "Tubulo - A train-like miniature inspection climbing robot for ferromagnetic tubes", APPLIED ROBOTICS FOR THE POWER INDUSTRY (CARPI), 2010 1ST INTERNATIONAL CONFERENCE ON, IEEE, PISCATAWAY, NJ, USA, 5 October 2010 (2010-10-05), pages 1 - 5, XP031792262, ISBN: 978-1-4244-6633-7

## Beschreibung

Die vorliegende Erfindung betrifft ein Odometer zur Distanzmessung bei einer Inspektions- und/oder Reinigungsvorrichtung, wobei das Odometer einen zum Abrollen auf einer Oberfläche vorgesehenen Träger umfasst, der um eine Drehachse drehbar in einem Halter des Odometers angeordnet ist und eine Mehrzahl von Magneten aufweist, die in Umfangsrichtung um die Drehachse herum angeordnet sind. Außerdem umfasst das Odometer einen Magnetfeldsensor zur Erzeugung von durch Rotation der Magnete des Trägers entstehender Signale. Des Weiteren betrifft die Erfindung eine Inspektions- und/oder Reinigungsvorrichtung umfassend ein solches Odometer.

Aus der CN 102621218 A ist ein Odometer oder auch Odometerrad bekannt, welches eine Mehrzahl von Magneten in Umfangsrichtung um eine Drehachse eines radförmigen Trägers herum angeordnet aufweist. Diese Magnete werden an einem Magnetfeldsensor vorbeigeführt, so dass sich in Abhängigkeit von der Drehbewegung des Rades ein entsprechendes Messsignal ergibt. Aus der Analyse dieses Signals kann mithilfe des Umfangs des Odometerrades auf die zurückgelegte Distanz geschlossen werden. Nachteilig ist bei dieser Vorrichtung allerdings, dass beispielsweise in stark verschmutzten Ölpipelines oftmals ein Schlupf des Rades erfolgt. In einem solchen Fall werden die Messergebnisse ungenau. In der CN 102621218 A wird daher vorgeschlagen, gleich mehrere solcher Odometer in einer Inspektions- und Reinigungsvorrichtung anzuordnen. Dies verkompliziert aufgrund der Datenfusion die Auswertung, gleichzeitig können die vorhandenen Odometer ebenfalls aufgrund von Schlupf dieselben Probleme aufweisen. Weiterhin verteuert die Anordnung mehrerer Odometer die Vorrichtung, macht die Vorrichtung schwerer und verringert den verwendbaren Bauraum.

Die US 6,125,955 beschreibt die Ausbildung eines Magnetrads für ein insbesondere vierrädriges Fahrzeug, welches über ferromagnetische Fläche fahren kann. Jedes Rad umfasst eine Reihe nebeneinander liegender ringförmiger Dauermagnetpolsätze.

Im Artikel "Tubulo - A train-like miniature inspection climbing robot for ferromagnetic tubes" von Patrick Schoeneich et al. (2010 1ST INTERNATIONAL CONFERENCE ON APPLIED ROBOTICS FOR THE POWER INDUSTRY, ISBN: 978-1-4244-6633-7) wird ein zugähnlicher, kletternder Inspektionsroboter für ferromagnetische Rohre vorgestellt. Der Roboter kann mit magnetischen Rädern versehen, die einen zentralen Magneten aufweisen, welcher beidseitig mit Führungsmitteln versehen ist.

Die nachveröffentlichte WO 2021/156433 A1 offenbart ein Inspektionsgerät für Pipelines, welches einen durch eine Rohrleitung rollbaren Sensorträger aufweist.

Es ist Aufgabe der vorliegenden Erfindung, ein Odometer und eine Inspektions- und/oder Reinigungsvorrichtung mit einem solchen Odometer dergestalt auszubilden, dass die Länge der zurückgelegten Strecke genauer bestimmt werden kann und gleichzeitig die Anzahl der Odometer möglichst gering gehalten wird.

Die Aufgabe wird gelöst durch Gegenstände gemäß Anspruch 1, 13 und 14. Vorteilhafte Ausgestaltungen der Erfindung sind den hierauf rückbezogenen Unteransprüchen sowie der nachfolgenden Beschreibung zu entnehmen.

Erfindungsgemäß ist der Träger dazu ausgebildet, mit einem jeweiligen Magneten und der magnetisierbaren Wand beispielsweise einer Rohrleitung einen geschlossenen Magnetkreis zu erzeugen. Die Magnete sind in Umfangsrichtung um die Drehachse des Trägers herum angeordnet und im Moment der größten Annäherung eines der Magnete an der Oberfläche bzw. der Wand der Rohrleitung wird durch das Magnetfeld eine starke Anziehungskraft zwischen Wand und Magnet bzw. Träger erzeugt. Hierdurch verbessert sich die Haftung des Odometers auf der Oberfläche der Wand, so dass sich die zu einer Rotation des Rades führende Reibkraft erhöht. Insbesondere bei ölbeschichteten Innenoberflächen von Rohrleitungen wird eine genauere Bestimmung der zurückgelegten Distanz möglich. Die magnetische Anziehung wirkt zwischen Träger und Wand und nicht in einem Achslager des Odometers. Daher kann beispielsweise der Andruck des Halters und die hiermit einhergehende Lagerreibung im Achslager reduziert werden. Dies gilt nicht nur für die Verwendung erfindungsgemäßer Odometer in Rohrleitungen sondern auch für die Verwendung erfindungsgemäßer Odometer auf anderen magnetisierbaren Wänden. Durch die von den Magneten erzeugten Anziehungskräfte mit der Oberfläche des abzuprüfenden Gegenstands wird ein Abrollen des radförmigen Trägers verbessert. Der Magnetfeldsensor erfasst das Magnetfeld der an dem Magnetfeldsensor vorbeigeführten Magnete des Trägers, insbesondere dann, wenn kein geschlossener Magnetkreis mit der Wand vorliegt. Die Amplituden der Messsignale können darüber hinaus Informationen über den Zustand des Odometers, insbesondere hinsichtlich einer Deformation oder eines trotz der magnetischen Anziehungskräfte auftretenden Rutschens des Rades bzw. Trägers geben.

Durch die gezielt zur Anziehung an eine Oberfläche ausgebildeten Odometer kann die Lagerreibung des oder der drehachsenseitigen Lager, die durch ein notwendiges Andrücken des Odometerrades an die Oberfläche der Wand entsteht, verringert werden. Insbesondere kann mit weniger Andruck gearbeitet werden und entsprechende Vorrichtungen können kleiner ausgelegt werden. Gleichwohl können auch herkömmliche Odometer von Inspektions- und/oder Reinigungsvorrichtungen durch erfindungsgemäße Odometer ersetzt werden, d.h. im Vergleich zu vorher auch identische Andruckkräfte vorliegen. Das auf das Odometer wirkende und durch die Reibung zwischen dem Rad und der Oberfläche erzeugte Drehmoment basiert somit auf einer Kraft, die durch die magnetische Anziehung zumindest mitbestimmt wird.

Es gibt eine Anzahl möglicher Ausbildungen eines geschlossenen Magnetkreises, beispielsweise durch einen Magnet in Hufeisenform. Vorteilhafterweise weist der Träger jedoch zumindest ein magnetisierbares Leitelement auf, welches das Magnetfeld eines jeweiligen Magneten leitet und insbesondere fokussiert. Ein solches Leitelement ist zumindest im Wesentlichen aus einem magnetisierbaren Metall ausgebildet, insbesondere aus einem ferromagnetischen Material, und kann das Magnetfeld zwischen entgegengesetzten Polen zwei Magneten leiten. Insbesondere leitet das magnetisierbare Leitelement die Magnetfeldlinien eines Magneten zur Oberfläche hin, auf der das Odometer entlangbewegt wird und auf dem der Träger abrollt.

Vorzugsweise sind die einzelnen Magnete mit ihren Nord-Süd-Ausrichtungen (N-S-Ausrichtungen) mit einem Winkel < 15° zur Drehachse und insbesondere parallel zur Drehachse angeordnet, so dass von den Polen des Magneten zumindest in etwa, vorzugsweise genau gleiche Abstände zur Oberfläche vorliegen. Ein symmetrischer Aufbau hilft dem Abrollen des Rades aufgrund hiermit einhergehender fehlender Unwuchten. Vorzugsweise verlaufen die Nord-Süd-Ausrichtungen einander in Umfangsrichtung folgender Magneten gleich, so dass sich im Träger und bei Verwendung von Leitelementen keine geschlossenen Magnetkreise zwischen einander nachfolgenden Magneten entstehen.

Insbesondere sind die Magnete möglichst dicht zur zu betrachtenden Wand hin im Träger anzuordnen, wobei sie gleichzeitig noch geschützt sein müssen. Beispielsweise sind die Magnete maximal 1cm, vorzugsweise maximal 0,5 mm im Betrieb von der Wand entfernt entlang des Umfangs des Trägers angeordnet.

Vorzugsweise sind jedem Magnet zwei Leitelemente zugeordnet, wobei der Magnet insbesondere parallel zur Drehachse angeordnet ist und die Leitelemente einen jeweiligen Magneten in Richtung parallel zur Drehachse beidseitig begrenzen. Weiterhin erstrecken sich die Leitelemente zur Ausbildung eines jeweiligen Magnetkreises mit der Wand radial nach außen hin, so dass in einem Schnitt entlang der Drehachse durch den Magneten eine U- oder angenäherte Hufeisenform entsteht, bei der der Magnet einen achsnahen Teil ausbildet und die Leitelemente die beiden im Betrieb in Richtung der Oberfläche der Wand der Rohrleitung weisenden Schenkel des "U" bzw. des Hufeisens darstellen. Vorzugsweise sind die Magnete 0,5 bis 4 cm vom radialen Außenumfang des Trägers beabstandet.

Durch die U- bzw. Hufeisenförmige Konstruktion werden die magnetischen Feldlinien in optimaler Weise zur Oberfläche geleitet, so dass sich ein Magnetschluss mit der Oberfläche ergibt und entsprechend eine gute Wechselwirkung und Anziehungskraft im Betrieb vorhanden ist. Die Leitelemente liegen seitlich des Magneten und von dort in radialer Richtung zum äußeren Umfang des Trägers hin. Sie wirken darüber hinaus noch als Stabilisierungsmittel, da durch eine Rotation des Trägers eine im Vergleich zur Drehachse radial außen liegende Masse beschleunigt ist. Die Leitelemente können insbesondere in Form von Kreisscheibensegmenten oder Kreisscheiben, die die Magneten begrenzen, ausgebildet sein und zuzüglich etwaig vorhandener Umfangsbeschichtungen oder Ummantelungen den in der Seitenansicht in Richtung der Drehachse kreisförmigen Umfang des Trägers ausbilden.

Vorzugsweise sind die Magnete dergestalt ausgelegt, dass im Augenblick größter Annäherung des jeweiligen Magnets an die Oberfläche der Wand der durch die magnetische Anziehungskraft der Magneten bewirkte Anteil an einer Rollreibung denjenigen aufgrund einer durch den Halter ausgeübten Andruckkraft überwiegt, d.h. dass die magnetische Anziehungskraft die Rollreibung zumindest im Wesentlichen bestimmt.

Es hat sich im Rahmen von umfangreichen Abschätzungen ergeben, dass die Magnetfeldstärke zumindest eines der Magnete am Außenumfang des Trägers sowie im Betrieb in der Wand zumindest 5 kA/m beträgt, vorzugsweise zumindest 10 kA/m und insbesondere zumindest 50 kA/m. Entsprechende Magnetfeldstärken des Odometers liegen somit zumindest eine, eher zwei oder drei Größenordnungen über denen, die im Stand der Technik lediglich für die Bestimmung der Umdrehungen des Rades bzw. Trägers verwendet werden.

Erfindungsgemäß beträgt die Magnetfeldstärke zumindest eines der Magnete am Außenumfang des Trägers in der Luft und entfernt von der Wand höchstens 500 kA/m, insbesondere höchstens 200 kA/m und noch weiter insbesondere höchstens 100 kA/m. Vorzugsweise in einem Bereich zwischen 50 und 100 kA/m sind erfindungsgemäße Odometer insbesondere für Rohrleitungen, in denen Öl transportiert wird, verwendbar. Entfernt von der Wand ist ein Magnet dann, wenn er im laufenden Betrieb zumindest eine Viertel Umdrehung des Trägers von seiner wandnächsten Position entfernt ist und insbesondere wenn der Magnet von der Wand den größten Abstand aufweist.

Vorstehende Betrachtungen der Magnetfeldstärke berücksichtigen die den Verlauf des Magnetfeldes aufgrund der Leitelemente.

Vorzugsweise sind die Magnete relativ beweglich zu dem an oder in einem Halter des Odometers angeordneten Magnetfeldsensor ausgebildet, so dass die Auswertung der Signale vergleichsweise einfach ist. Der Magnetfeldsensor ist bezogen auf die Drehachse zusätzlich vorzugsweise exzentrisch und insbesondere umfangsseitig des Trägers angeordnet. Beispielsweise ist er in oder an einer Basis des Halters zwischen zwei Tragarmen des den Träger haltenden Halters befestigt. Umfangsseitig des Trägers ist ein Odometer gemäß einer weiteren Ausbildung der Erfindung mit einer flexiblen Ummantelung versehen, wobei eine flexible Ummantelung eine solche ist, die in Abhängigkeit der vorliegenden Magnetfeldstärke eine während des Abrollens entstehende Dickenverringerung in radialer Richtung um zumindest 10 %, vorzugsweise um zumindest 30 % und insbesondere um zumindest 40% erfährt. Diese Komprimierung oder elastische Verformung des Materials liegt dann vor, wenn der jeweilige Magnet während des Abrollens des Trägers seine größte Annäherung an die vorliegende Oberfläche erfährt. Nach einem Weiterrollen kann sich das Material dann wieder auf seine ursprüngliche Dicke ausdehnen. Hierdurch wird eventuell überfahrener, magnetisch haftender Schmutz oder Dreck weiter vom Magnet des Trägers entfernt, so dass sich das sich die Magnetfeldstärke desselben verringert. Aufgrund des gleichzeitig von in der Wand vorhandenen Magnetfeldes wird magnetisch haftender Schmutz tendenziell an der Wand haften und somit der Träger und das hierdurch ausgebildete Rad sauber bleiben. Insbesondere ist die Ummantelung in radialer Richtung maximal 2 mm dick, insbesondere maximal 1 mm dick.

Ergänzend kann der radförmige Träger zumindest auf einer Seite eine in Umfangsrichtung umlaufende, nichtmagnetische Beschichtung aufweisen. Vorzugsweise sind auf beiden Seiten des Magneten und/oder zugehöriger Leitelemente nichtmagnetische Beschichtungen vorhanden, die eine Beabstandung von den magnetisierten Leitelementen bzw. vom Magneten bewirken und somit das Anhaften von Material und Dreck verringern. Die Beschichtung kann kreisringförmig oder auch scheibenförmig jeweils auf beiden Seiten des Magneten, bezogen auf die Drehachse, ausgebildet sein, so dass sie zumindest im äußeren Umfangsbereich, in dem am ehesten Schmutz anhaftet, eine Abschirmung bewirken.

Sollte doch etwaiger Schmutz magnetisch haften, der durch die vorgenannten Maßnahmen nicht abgehalten werden konnte, kann es gemäß einer weiteren vorteilhaften Ausbildung der Erfindung sinnvoll sein, wenn das Odometer ein zum Abkratzen von anhaftendem magnetischem Schmutz vorgesehenes Reinigungselement aufweist, welches zumindest auf einen umfangsseitig einer äußeren Oberfläche des Trägers vorhandenen Bereich einwirkt, also insbesondere in einem geringen Abstand < 5 mm von einer äußeren Oberfläche des Trägers angeordnet ist. Entsprechend kann es sich beispielsweise um einen Kratzer handeln, der in Umfangsrichtung oder auch auf den Seiten des Trägers umlaufenden Schmutz entfernt, so dass eine Anziehungskraft zwischen Träger bzw. Odometer und Oberfläche im Laufe eines Messlaufes weiter optimal ausgebildet werden kann. Gleiches gilt auch für Odometer-Varianten, die keine Ummantelung oder Beschichtung aufweisen. Das Reinigungselement ist vorzugsweise aus einem nicht-magnetischen und nichtmagnetisierbaren Material, beispielsweise aus einem Polyurethan.

Die eingangs gestellte Aufgabe wird zusätzlich durch eine Reinigungs- und/oder Inspektionsvorrichtung umfassend ein vor- oder nachbeschriebenes Odometer gelöst, bei der zusätzlich eine auf den Halter wirkende Andrückvorrichtung zur Positionierung des Trägers an einer Oberfläche vorhanden ist und die sich dadurch auszeichnet, dass im Betrieb eine in einem Achslager wirkende Andrückkraft dieser Andrückvorrichtung geringer ist als eine durch einen oberflächennahen Magneten bewirkte Anziehungskraft. Entsprechend wird das Reibdrehmoment des Trägers im Wesentlichen durch die magnetische Wechselwirkung der Magneten bewirkt. Oberflächennah ist ein Magnet im Moment seines geringsten Abstands zur Oberfläche der Wand während eines Messlaufes.

Ergänzend umfasst eine erfindungsgemäße Inspektions- und/oder Reinigungsvorrichtung eine EDV-Vorrichtung zur Aufnahme der Signale des Magnetfeldsensors, wobei diese EDV-Vorrichtung Teil einer kontinuierlich mit der Inspektions- und/oder Reinigungsvorrichtung verbundenen, insbesondere in diese integrierte EDV-Vorrichtung sein kann oder auch Teil einer nicht kontinuierlich mit der Reinigungs- und/oder Inspektionsvorrichtung verbundenen Anordnung ist. Insbesondere werden die Signale bzw. Messdaten des Magnetfeldsensors des Odometers während eines Messlaufs in einem Speicher der EDV-Vorrichtung gespeichert. Ergänzend kann bereits während des Messlaufes die EDV-Vorrichtung die Signale des Magnetfeldsensors auswerten und entsprechend weitere Messdaten einer Inspektionsvorrichtung, sofern vorhanden, mit entsprechenden Positions- bzw. Distanzdaten koppeln.

Vorzugsweise umfasst die Inspektions- und/oder Reinigungsvorrichtung ebenfalls eine hieran anschließbare Analysevorrichtung, die dazu eingerichtet ist, mittels eines Signalverlaufs auf eine Abnutzung, eine Deformation und/oder ein Rutschen des Trägers zu schließen. Eine Abnutzung des Trägers ergibt sich insbesondere aus einer Abweichung von den ursprünglichen Amplituden des gemessenen Signals, während ein Durchrutschen des Rades durch eine Beabstandung der Amplituden (in zeitlicher Hinsicht) erkennbar wird.

Weitere Vorteile und Einzelheiten der Erfindung sind der nachfolgenden Figurenbeschreibung zu entnehmen. Schematisch dargestellt zeigt:

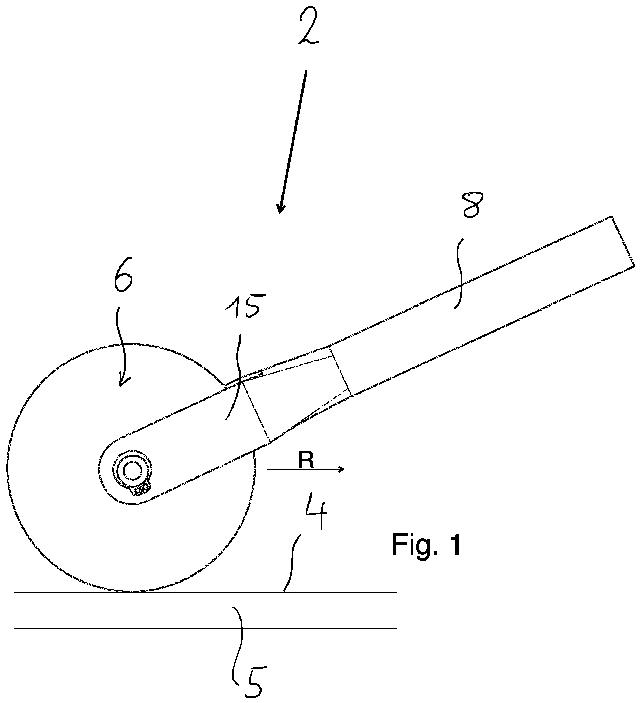

- Fig. 1: einen erfindungsgemäßen Gegenstand in einer Seitenansicht,

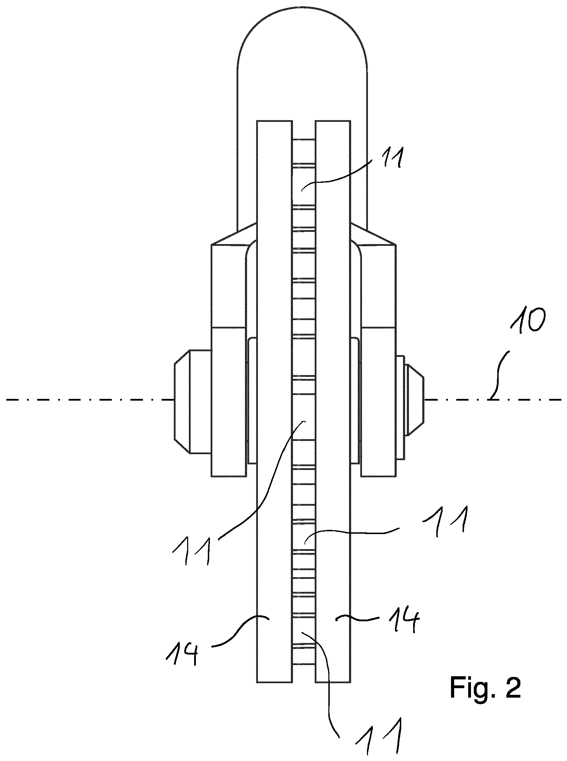

- Fig. 2: den Gegenstand nach Fig. 1 in einer Ansicht von vorne,
- Fig. 3: den Gegenstand nach Fig. 1 in einer perspektivischen Ansicht,
- Fig. 4: Messdaten eines erfindungsgemäßen Gegenstands,
- Fig. 5: eine Schnittansicht eines erfindungsgemäßen Gegenstands,
- Fig. 6: einen weiteren erfindungsgemäßen Gegenstand,
- Fig. 7: einen weiteren erfindungsgemäßen Gegenstand,
- Fig. 8: den Gegenstand nach Fig. 7 in einer Seitenansicht,
- Fig. 9: einen weiteren erfindungsgemäßen Gegenstand.

Einzelne technische Merkmale der nachfolgend beschriebenen Ausführungsbeispiele können auch in Kombination mit den Merkmalen zumindest der unabhängigen Ansprüche zu erfindungsgemäßen Weiterbildungen führen. Sofern sinnvoll sind funktional gleichwirkende Teile mit identischen Bezugsziffern versehen.

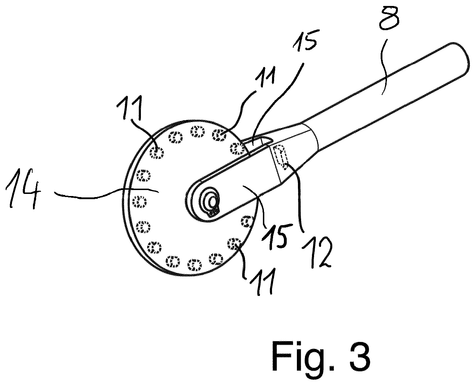

Ein erfindungsgemäßes Odometer 2 ist generell zum Abrollen auf einer Oberfläche 4 einer Wand 5, beispielsweise einer Rohrleitung, ausgebildet. Hierfür rollt ein rollbarer Träger 6, typischerweise in Radform, gehalten von einem Halter 8 auf der Oberfläche 4 in Richtung R. Über einen Magnetsensor 12 (vergl. Fig. 3) werden im Betrieb Signale von um eine Drehachse 10 des Odometers 2 rotierender Magneten erzeugt und bei einer Ausbildung der Erfindung als Inspektions- und/oder Reinigungsvorrichtung in einer zugehörigen Speichereinheit einer EDV-Vorrichtung 30 gespeichert. Die im Magnetfeldsensor 12 gemessenen Maxima und Minima ergeben sich allgemein aus der Abfolge einander nachfolgender Magneten 12 mit parallel zur Drehachse 10 verlaufenden, gleichen Nord-Süd-Ausrichtungen.

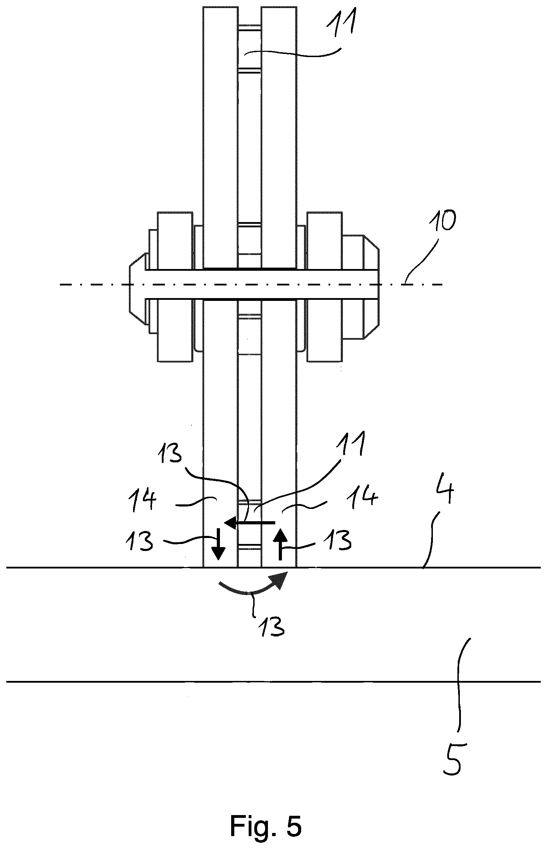

Der Träger 6 des Odometers 2 ist zur Ausbildung eines geschlossenen Magnetkreises mit der Oberfläche 4 ausgebildet und weist hierfür Leitelemente 14 auf, die in Richtung der Drehachse 10 seitlich neben einem jeweiligen Magnet 11 angeordnet sind und den durch Pfeile 13 (Fig. 5) indizierten Magnetkreis ausbilden. Durch die Leitelemente 14 wird das Magnetfeld eines jeweiligen Magneten 11 in Richtung der Oberfläche 4 geleitet und insbesondere fokussiert. Hierdurch ergeben sich hohe Anziehungskräfte zwischen dem Träger 6 und der Oberfläche 4, sofern diese aus einem magnetisierbaren Material zumindest mit aufgebaut ist, was einem Rutschen des Trägers 6 während des Abrollens entgegenwirkt. Dies verbessert die durch Odometer erfolgende Distanzmessung und eine Positionsbestimmung der Inspektions- und Reinigungsvorrichtung auf Basis der vom Magnetfeldsensor erzeugten Signale ist verbessert.

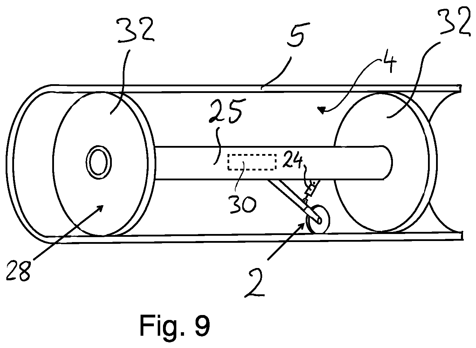

Der Halter 8 ist typischerweise an einer Inspektions- und/oder Reinigungsvorrichtung 28 befestigt, welche durch Vortriebselemente beispielsweise in Form von Cups oder Disks 32 von einem Medium durch eine Rohrleitung gedrückt wird. Insbesondere ist der Halter 8 hierbei von einer Andrückvorrichtung 24 federnd gegenüber einem Zentralkörper 25 der auch als Molch bezeichneten Inspektions- und/oder Reinigungsvorrichtung 28 abgestützt (vergl. Fig. 9).

Vorliegend sind die Ausführungsbeispiele mit insgesamt sechzehn Magneten 11 versehen, die in Umfangsrichtung und relativ weit zum äußeren Umfang des jeweiligen Trägers 6 hin zwischen Leitelementen 14 angeordnet sind (Fig. 3). Der Träger des Odometers 2 wird von zwei Tragarmen 15 gehalten, die in einer Basis des Halters 8 zusammenlaufen. In dieser Basis befindet sich der Magnetfeldsensor 12, der somit umfangsseitig des in einer Seitenansicht kreisförmigen Trägers 6 positioniert ist.

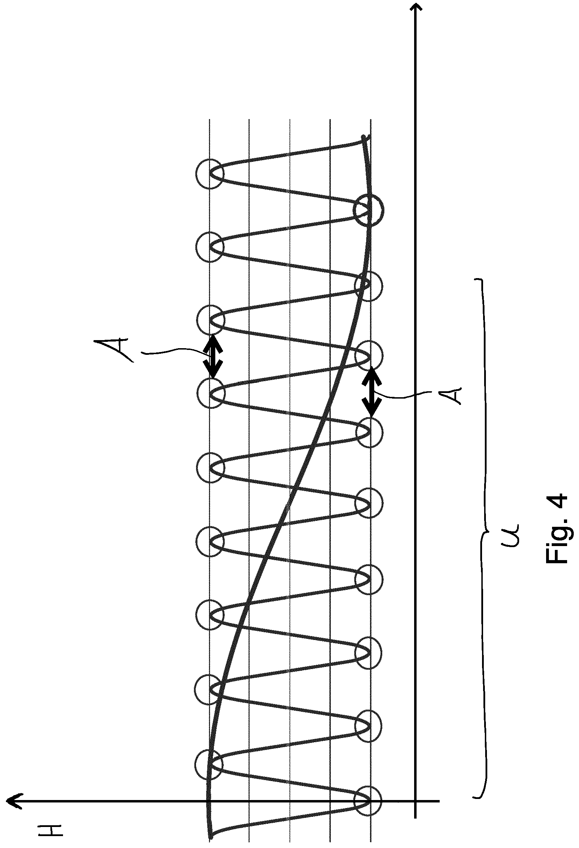

Durch die im Betrieb erfolgte Bewegung der Magnete 11 am Magnetfeldsensor 12 entlang ergibt sich idealisiert ein in Fig. 4 abgebildeter Signalverlauf, mit pro halben Umlauf U des Trägers 6 insgesamt acht Minima und acht Maxima, die sich aufgrund der einander folgenden Magnete gleicher Ausrichtung ergibt. Ein vollständiger Umlauf U über 360° des kreisförmigen Trägers kann somit durch je siebzehn mit kleinen Kreisen gekennzeichneten Maxima oder Minima aufgelöst werden (Fig. 4). Die unter der Kurve mit den vielen Minima und Maxima liegende weitere Kurve mit nur einem Maximum und nur einem Minimum würde entstehen bei Odometern, die typischerweise im Stand der Technik verwendet werden und die nur einen umlaufenden Magneten im Träger aufweisen. Im Vergleich hierzu ist die Genauigkeit der Messung des erfindungsgemäßen Odometers 2 deutlich verbessert.

Je nach Abstand A aufeinanderfolgender Maxima und Minima kann auf ein teilweises Rutschen des Trägers bzw. Odometers 2 geschlossen werden, was aufgrund der Vielzahl der pro Umdrehung durchgeführten Messungen ebenfalls gut zu identifizieren ist. Die Änderung der Höhe H der Maxima und Minima gibt darüber hinaus Aufschlüsse über die Abnutzung und/oder Deformation des radförmigen Trägers 6.

Gemäß einem Ausführungsbeispiel der Erfindung ist die durch die magnetische Anziehungskraft zwischen Magneten 11 des Trägers 6 und der Wand einer Rohrleitung größer als die durch ein Andrücken des Trägers bewirkte Kraft. Insbesondere kann aufgrund der magnetischen Anziehungskraft die Lagerreibung, die durch das über den Halter ausgeübte Andrücken des Trägers 6 an die Oberfläche einer Wand entsteht, reduziert werden. Dies vergleichmäßigt wiederum das Abrollen des Odometers 2 auf der Oberfläche 4.

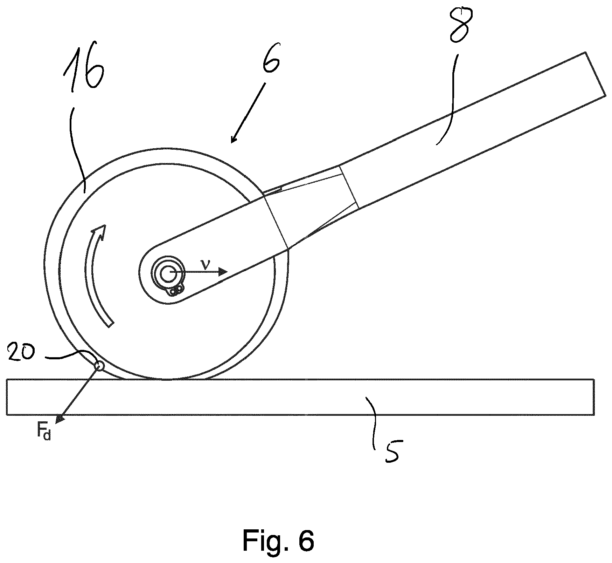

Zusätzlich kann eine Ummantelung 16 des Trägers 6 vorgesehen sein, die die Reibung zwischen radförmigem Träger 6 und der Wand 5 vergrößert. Die Ummantelung 16 ist insbesondere flexibel ausgebildet, so dass sie, wie es in Fig. 6 veranschaulicht wird, im Betrieb im Punkt des geringsten Abstands zwischen Magnet 11 und Wand 5 zusammengedrückt wird und sich anschließend wieder ausdehnt. Hierdurch wird der Abstand von auf der Außenseite der Beschichtung Ummantelung 16 vorhandenem magnetischem Schmutz, d.h. magnetisch angezogenen Partikeln in der Rohrleitung, zu den Magneten 11 wieder vergrößert, so dass eine Kraft Fd auf den Dreck wirken kann, die durch Fliehkräfte und/oder durch eine aufgrund der mittels des Magnetisierens durch das Odometer erzeugte magnetische Anziehung von der Wand bestimmt ist und dazu führt, dass der Schmutz 20 sich nicht mehr magnetisch an dem Träger 6 halten kann.

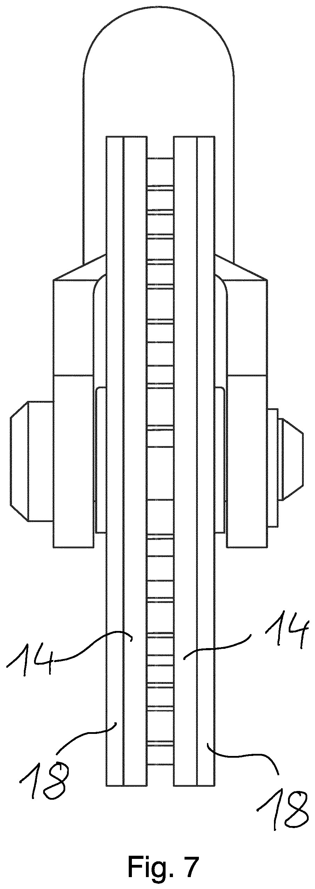

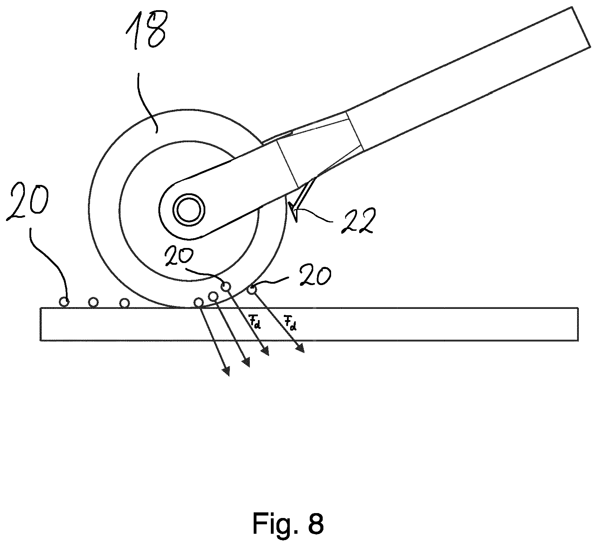

Ergänzend kann zusätzlich eine in Umfangsrichtung umlaufende, nichtmagnetische Beschichtung 18 beidseits der Magnete und insbesondere der Leitelemente 14 angeordnet sein, die ebenfalls denselben Effekt bewirkt wie die soeben beschriebene Ummantelung 16. Durch eine zusätzliche Beabstandung kann sich weniger Dreck an den Leitelementen 14 ansammeln, so dass etwaiger Dreck 20 sich tendenziell eher an der Rohrleitungswand 5 hält (Fig. 7 und 8). Zusätzlich kann ein Reinigungselement 22 am Halter 8 angeordnet sein, welches mechanisch magnetisch anhaftenden Schmutz von der Oberfläche der Ummantelung abkratzt (Fig. 8).

Eine erfindungsgemäße Inspektions- und/oder Reinigungsvorrichtung umfasst vorliegend neben einem vorbeschriebenen Odometer 2 weiterhin die Andrückvorrichtung 24 zur Positionierung des Trägers 6 an einer Oberfläche der Wand 5 einer Rohrleitung. Diese Inspektions- und/oder Reinigungsvorrichtung umfasst ebenfalls die EDV-Vorrichtung 30 zur Aufnahme der Signale des Magnetfeldsensors 12, angeordnet in einem Zentralkörper 25. Die in dieser EDV-Vorrichtung 30 vorhandenen Daten werden nach Ende des Messlaufes in eine Analysevorrichtung überführt, die dazu eingerichtet ist, mittels des Signalverlaufs und insbesondere der Änderungen der Höhe H der gemessenen Signale und der Amplitudenabstände A auf eine Deformation und/oder auf ein Rutschen des radförmigen Trägers 6 zu schließen.

## Patentansprüche

1. Odometer zur Distanzmessung bei einer Inspektions- und/oder Reinigungsvorrichtung, wobei das Odometer einen zum Abrollen auf einer Oberfläche (4) einer Wand (5), insbesondere einer Rohrleitung, vorgesehenen Träger (6) umfasst, der um eine im Betrieb ausgebildete Drehachse (10) drehbar in einem Halter (8) des Odometers (2) angeordnet ist und eine Mehrzahl von Magneten (11) aufweist, die in Umfangsrichtung um die Drehachse (10) herum angeordnet sind, und wobei das Odometer (2) einen Magnetfeldsensor (12) zur Erzeugung durch Rotation der Magnete (11) entstehender Signale aufweist, **dadurch gekennzeichnet, dass** der Träger (6) dazu ausgebildet ist, mit einem jeweiligen Magneten (11) und der magnetisierbaren Wand (5) einen geschlossenen Magnetkreis zu erzeugen, wobei die Magnetfeldstärke zumindest eines der Magnete (11) am Außenumfang des Trägers in der Luft und entfernt von der Wand höchstens 500 kA/m beträgt.

2. Odometer nach Anspruch 1, **dadurch gekennzeichnet, dass** der Träger zumindest ein magnetisierbares Leitelement (14) aufweist, welches das Magnetfeld eines jeweiligen Magneten (11) leitet und insbesondere fokussiert.

3. Odometer nach Anspruch 2, **dadurch gekennzeichnet, dass** die Magnete mit ihren Nord-Süd-Ausrichtungen in einem Winkel kleiner 15° zur Drehachse (10) und insbesondere parallel zur Drehachse (10) angeordnet sind.

4. Odometer nach Anspruch 3 mit zumindest zwei Leitelementen, **dadurch gekennzeichnet**, 13 dass die Leitelemente (14) einen jeweiligen Magneten (11) in Richtung parallel zur Drehachse (10) beidseitig begrenzen und sich zur Ausbildung eines jeweiligen Magnetkreises mit der Wand (5) radial nach außen erstrecken.

5. Odometer nach einem der vorherigen Ansprüche, **dadurch gekennzeichnet, dass** die Magnete (11) zur Ausbildung einer eine Rollreibung zumindest im Wesentlichen bestimmende Anziehungskraft mit der Wand (5) ausgebildet sind.

6. Odometer nach einem der vorherigen Ansprüche, **dadurch gekennzeichnet, dass** die Magnetfeldstärke zumindest eines der Magnete (11) am Außenumfang des Trägers im Betrieb und in der Wand zumindest 5 kA/m, vorzugsweise zumindest 10 kA/m und insbesondere zumindest 50 kA/m beträgt.

7. Odometer nach einem der vorherigen Ansprüche, **dadurch gekennzeichnet, dass** die Magnetfeldstärke zumindest eines der Magnete (11) am Außenumfang des Trägers in der Luft und entfernt von der Wand höchstens 200 kA/m und insbesondere höchstens 100 kA/m beträgt.

8. Odometer nach einem der vorherigen Ansprüche, **dadurch gekennzeichnet, dass** die Magnete (11) relativ beweglich zu dem an oder in einem Halter (8) des Odometers (2) angeordneten Magnetfeldsensor (12) ausgebildet sind.

9. Odometer nach einem der vorherigen Ansprüche, **dadurch gekennzeichnet, dass** der Magnetfeldsensor (12) bezogen auf die Drehachse (10) exzentrisch und insbesondere umfangsseitig des Trägers (6) angeordnet ist.

10. Odometer nach einem der vorherigen Ansprüche, **dadurch gekennzeichnet, dass** der Träger (6) umfangsseitig mit einer flexiblen Ummantelung (16) versehen ist.

11. Odometer nach einem der vorherigen Ansprüche, **dadurch gekennzeichnet, dass** der radförmige Träger (6) zumindest auf einer Seite eine in Umfangsrichtung umlaufende, nicht magnetische Beschichtung (18) aufweist.

12. Odometer nach einem der vorherigen Ansprüche, **dadurch gekennzeichnet, dass** es ein zum Abkratzen von anhaftendem magnetischem Schmutz vorgesehenes Reinigungselement (22) aufweist, welches zumindest auf einen umfangsseitig einer äußeren Oberfläche des Trägers (6) vorhandenen Bereich einwirkt.

13. Inspektions- und/oder Reinigungsvorrichtung umfassend ein Odometer nach einem der vorherigen Ansprüche sowie eine auf den Halter (8) wirkende Andrückvorrichtung (24) zur Positionierung des Trägers (6) an einer Oberfläche (4) insbesondere einer Rohrleitung, **dadurch gekennzeichnet, dass** eine im Betrieb in einem Achslager wirkende Andrückkraft (24) geringer ist als eine durch einen oberflächennahen Magneten (11) bewirkte Anziehungskraft.

14. Odometeranordnung mit einem Odometer nach einem der vorherigen Ansprüche sowie insbesondere nach Anspruch 13, mit einer EDV-Vorrichtung (30) zur Aufnahme der Signale des Magnetfeldsensors (12).

15. Odometeranordnung nach Anspruch 14, **gekennzeichnet durch** eine Analysevorrichtung, die dazu eingerichtet ist, mittels eines Signalverlaufs auf eine Deformation und/oder auf ein Rutschen des Trägers (6) zu schließen.

## Claims

1. An odometer for distance measurement in an inspection and/or cleaning device, wherein the odometer comprises a carrier (6), which is provided for rolling on a surface (4) of a wall (5), in particular of a pipeline, is arranged in a holder (8) of the odometer (2) so as to be rotatable about an axis of rotation (10) formed during operation and has a multiplicity (11) of magnets, which are arranged circumferentially around the axis of rotation (10), and wherein the odometer (2) has a magnetic field sensor (12) for generating signals produced through rotation of the magnets (11), **characterized in that** the carrier (6) is designed to generate a closed magnetic circuit with a respective magnet (11) and the magnetizable wall (5), wherein the magnetic field strength of at least one of the magnets (11) at the outer circumference of the carrier in the air and away from the wall is a maximum of 500 kA/m.

2. The odometer as claimed in claim 1, **characterized in that** the carrier has at least one magnetizable conducting element (14), which conducts and in particular focuses the magnetic field of a respective magnet (11).

3. The odometer as claimed in claim 2, **characterized in that** the magnets are arranged with their North-South alignments at an angle of smaller than 15° to the axis of rotation (10) and in particular parallel to the axis of rotation (10).

4. The odometer as claimed in claim 3, having at least two conducting elements, **characterized in that** the conducting elements (14) delimit a respective magnet (11) on both sides in the direction parallel to the axis of rotation (10) and extend radially outwards to form a respective magnetic circuit with the wall (5).

5. The odometer as claimed in one of the preceding claims, **characterized in that** the magnets (11) are designed to generate an attractive force with the wall (5), which at least substantially determines a rolling friction.

6. The odometer as claimed in one of the preceding claims, **characterized in that** the magnetic field strength of at least one of the magnets (11) at the outer circumference of the carrier during operation and in the wall is at least 5 kA/m, preferably at least 10 kA/m and in particular at least 50 kA/m.

7. The odometer as claimed in one of the preceding claims, **characterized in that** the magnetic field strength of at least one of the magnets (11) at the outer circumference of the carrier in the air and away from the wall is a maximum of 200 kA/m and in particular a maximum of 100 kA/m.

8. The odometer as claimed in one of the preceding claims, **characterized in that** the magnets (11) are designed so as to be movable relative to the magnetic field sensor (12) arranged on or in a holder (8) of the odometer (2).

9. The odometer as claimed in one of the preceding claims, **characterized in that** the magnetic field sensor (12) is arranged eccentrically with respect to the axis of rotation (10) and in particular at the circumference of the carrier (6).

10. The odometer as claimed in one of the preceding claims, **characterized in that** the carrier (6) is provided with a flexible sheathing (16) at the circumference.

11. The odometer as claimed in one of the preceding claims, **characterized in that** the wheel-shaped carrier (6) has a circumferentially extending, non-magnetic coating (18), at least on one side.

12. The odometer as claimed in one of the preceding claims, **characterized in that** it has a cleaning element (22), which is provided for scratching off adhering magnetic dirt and acts at least on a region located at the circumference of an outer surface of the carrier (6).

13. An inspection and/or cleaning device, comprising an odometer as claimed in one of the preceding claims, and a pressing device (24) acting on the holder (8) to position the carrier (6) on a surface (4), in particular of a pipeline, **characterized in that** a pressing force (24) which acts in an axle bearing during operation is lower than an attractive force produced by a magnet (11) which is close to the surface.

14. An odometer arrangement having an odometer as claimed in one of the preceding claims, and in particular as claimed in claim 13, having an EDP device (30) for receiving the signals of the magnetic field sensor (12).

15. The odometer arrangement as claimed in claim 14, **characterized by** an analysis device, which is designed to infer a deformation and/or a slipping of the carrier (6) with the aid of a signal curve.

## Revendications

1. Odomètre pour la mesure de distance dans un dispositif d'inspection et/ou de nettoyage, l'odomètre comprenant un support (6) prévu pour rouler sur une surface (4) d'une paroi (5), en particulier d'une canalisation, qui est disposé de manière rotative autour d'un axe de rotation (10) formé pendant le fonctionnement dans un support (8) de l'odomètre (2) et comporte une pluralité d'aimants (11) qui sont disposés autour de l'axe de rotation (10) dans la direction circonférentielle, et l'odomètre (2) comportant un capteur de champ magnétique (12) pour générer des signaux induits par la rotation des aimants (11), **caractérisé en ce que** le support (6) est conçu pour générer un circuit magnétique fermé avec un aimant (11) respectif et la paroi magnétisable (5), l'intensité du champ magnétique d'au moins l'un des aimants (11) sur la circonférence extérieure du support dans l'air et à distance de la paroi étant d'au plus 500 kA/m.

2. Odomètre selon la revendication 1, **caractérisé en ce que** le support comporte au moins un élément de guidage magnétisable (14) qui guide et focalise en particulier le champ magnétique d'un aimant (11) respectif.

3. Odomètre selon la revendication 2, **caractérisé en ce que** les aimants sont agencés de manière que leurs orientations nord-sud forment un angle inférieur à 15° par rapport à l'axe de rotation (10) et en particulier parallèlement à l'axe de rotation (10).

4. Odomètre selon la revendication 3, comprenant au moins deux éléments de guidage, **caractérisé en ce que** les éléments de guidage (14) délimitent un aimant (11) respectif des deux côtés dans une direction parallèle à l'axe de rotation (10) et s'étendent radialement vers l'extérieur pour former un circuit magnétique respectif avec la paroi (5).

5. Odomètre selon l'une des revendications précédentes, **caractérisé en ce que** les aimants (11) sont conçus pour produire avec la paroi (5) une force d'attraction qui détermine au moins sensiblement un frottement de roulement.

6. Odomètre selon l'une des revendications précédentes, **caractérisé en ce que** l'intensité du champ magnétique d'au moins l'un des aimants (11) sur la périphérie extérieure du support en fonctionnement et dans la paroi est d'au moins 5 kA/m, de préférence d'au moins 10 kA/m et en particulier d'au moins 50 kA/m.

7. Odomètre selon l'une des revendications précédentes, **caractérisé en ce que** l'intensité du champ magnétique d'au moins l'un des aimants (11) sur la périphérie extérieure du support dans l'air et à l'opposé de la paroi est d'au plus 200 kA/m et en particulier d'au plus 100 kA/m.

8. Odomètre selon l'une des revendications précédentes, **caractérisé en ce que** les aimants (11) sont conçus de manière à pouvoir être déplacés par rapport au capteur de champ magnétique (12) disposé sur ou dans un support (8) de l'odomètre (2).

9. Odomètre selon l'une des revendications précédentes, **caractérisé en ce que** le capteur de champ magnétique (12) est disposé de manière excentrée par rapport à l'axe de rotation (10) et en particulier du côté de la périphérie du support (6).

10. Odomètre selon l'une des revendications précédentes, **caractérisé en ce que** le support (6) est pourvu du côté de la périphérie d'une enveloppe flexible (16).

11. Odomètre selon l'une des revendications précédentes, **caractérisé en ce que** le support (6) en forme de roue présente au moins sur un côté un revêtement non magnétique (18) qui s'étend dans la direction périphérique.

12. Odomètre selon l'une des revendications précédentes, **caractérisé en ce qu'**il comporte un élément de nettoyage (22) prévu pour enlever les salissures magnétiques qui adhèrent, lequel élément agit au moins sur une zone présente du côté de la périphérie d'une surface extérieure du support (6).

13. Dispositif d'inspection et/ou de nettoyage comprenant un odomètre selon l'une des revendications précédentes et un dispositif de pression (24) agissant sur le support (8) pour positionner le support (6) sur une surface (4), en particulier une canalisation, **caractérisé en ce qu'**une force de pression (24) agissant dans un roulement d'axe pendant le fonctionnement est inférieure à une force d'attraction produite par un aimant (11) à proximité de la surface.

14. Système d'odomètre comprenant un odomètre selon l'une des revendications précédentes et en particulier selon la revendication 13, doté d'un dispositif EDV (30) pour acquérir les signaux provenant du capteur de champ magnétique (12).

15. Système d'odomètre selon la revendication 14, **caractérisé par** un dispositif d'analyse qui est conçu pour déduire une déformation et/ou un glissement du support (6) au moyen d'un profil du signal.
